Europäisches Patentamt

European Patent Office

Office européen des brevets

(19)

(11) **EP 0 995 257 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(21) Anmeldenummer: **98935023.6**

(22) Anmeldetag: **07.07.1998**

(51) Int Cl.$^7$: **H02K 1/24**, H02K 19/22

(86) Internationale Anmeldenummer:
**PCT/EP98/04202**

(87) Internationale Veröffentlichungsnummer:
**WO 99/03187 (21.01.1999 Gazette 1999/03)**

(54) **SYNCHRONGENERATOR ZUM EINSATZ BEI WINDENERGIEANLAGEN SOWIE WINDENERGIEANLAGE**

SYNCHRONOUS ALTERNATOR FOR USE IN A WIND POWER PLANT AND WIND POWER PLANT

ALTERNATEUR SYNCHRONE A UTILISER DANS DES INSTALLATIONS EOLIENNES, ET UNE TELLE INSTALLATION EOLIENNE

(84) Benannte Vertragsstaaten:
**DE DK ES FI GB GR IE IT PT SE**

(30) Priorität: **08.07.1997 DE 19729034**

(43) Veröffentlichungstag der Anmeldung:
**26.04.2000 Patentblatt 2000/17**

(73) Patentinhaber: **Wobben, Aloys**
**26607 Aurich (DE)**

(72) Erfinder: **Wobben, Aloys**
**26607 Aurich (DE)**

(74) Vertreter: **Eisenführ, Speiser & Partner**
**Martinistrasse 24**
**28195 Bremen (DE)**

(56) Entgegenhaltungen:
AT-B- 352 824          DE-C- 622 115
FR-A- 1 215 804        US-A- 1 369 765

- **WANG F X ET AL: "WAVEFORM OPTIMIZATION DESIGN OF AN AC CONVERTER MACHINE" Mai 1989 , IEEE TRANSACTIONS ON INDUSTRY APPLICATIONS, VOL. 25, NR. 3, PAGE(S) 436 - 440 XP000039074 siehe Seite 438, Spalte 2, Absatz 2 - Seite 440, Spalte 1, Absatz 1; Abbildungen 1,4,10-12**
- **PATENT ABSTRACTS OF JAPAN vol. 006, no. 182 (E-131), 18. September 1982 & JP 57 097337 A (HITACHI LTD), 17. Juni 1982**
- **H. JORDAN, S. NOWACK, M. WEIS: "ÜBER DEN MAGNETISCHEN LÄRM VON SYNCHRONMASCHINEN" AT-Z ELEKTROTECHNIK UND MASCHINENBAU, Nr. 1, Januar 1967, Seiten 1-8, XP002082420 WIEN**

EP 0 995 257 B1

**Beschreibung**

Die Erfindung betrifft einen Synchrongenerator mit einem Generator-Stator und einem relativ zum Stator bewegbaren Generator-Läufer, welcher n Pole aufweist, zum Erzeugen elektrischer Energie, wobei der zeitliche Verlauf der induzierten Spannung in einer Statorwicklung bzw. mehreren Statorwicklungen im wesentlichen dem Stromverlauf in einer Statorwicklung oder der Summe von wenigstens m Teilströmen in m Statorwicklung angenähert ist, sowie eine Windenergieanlage mit einen Turm, einem an diesem angeordnetem Rotor sowie einem an den Rotor antreibbaren Generator, bei dem es sich um den zuvor erwähnten Synchrongenerator handelt.

Ein Generator der eingangs genannten Art ist beispielsweise in dem Artikel "Waveform Optimization Design of an AC Converter Machine" von F. X. Wang und B. Y. Zhang auf den Seiten 436 bis 440 der Schrift "8095 IEEE Transaction on Industry Applications", Ausgabe 3 vom Mai/Juni 1998 (New York, US) beschrieben. Diese bekannte Maschine weist eine asymmetrisch Ausbildung der Pole auf, wobei die Anordnung der in sich asymmetrisch ausgebildeten Pole symmetrisch ist.

Langsamdrehende Mehrphasen-Synchrongeneratoren für den Einsatz bei Windenergieanlagen sind bekannt. Direkt angetriebene Generatoren des vorgenannten Typs für Windenergieanlagen drehen im allgemeinen mit relativ kleinen Drehzahlen im Bereich von 20 bis 40 U/min. Für eine Leistung von ca. 1 bis 2 MW liegt die Drehzahl sogar noch niedriger und zwar im Bereich von etwa 10 bis 25 U/min. Bekannte Mehrpasen-Synchrongeneratoren des vorgenannten Typs werden in den Windenergieanlagen vom Typ E-40 oder E-66 der Firma Enercon Energieanlagen GmbH eingesetzt.

Bei diesen Windenergieanlagen weist der Mehrphasen-Synchrongenerator einen ringförmigen Stator auf, innerhalb dessen sich ein Läufer bewegt, welcher ohne Zwischenschaltung eines Getriebes direkt mit dem Rotor der Windenergieanlage gekoppelt ist. Der Läufer ist als Schenkelpolmaschine ausgeführt und weist eine Vielzahl von Polen mit Polschuhen auf, die auch als Polköpfe bezeichnet werden.

Generelles Ziel bei der Konstruktion und Auslegung des Generators ist es, daß dieser im Betrieb der Windenergieanlage möglichst wenig Geräusche abgibt, um die Umwelt möglichst wenig zu beeinträchtigen und letztlich auf die Akzeptanz von Windenergieanlagen insgesamt zu verbessern.

Die geforderte geringe Geräuschabgabe wird von den bisherigen Generatoren nicht immer erreicht, da diese im Betrieb zu stärkeren mechanischen Schwingungen angeregt werden, die sich auf andere Komponenten der Winderenergieanlage wie den Rotor, das Maschinenhaus oder den Turm übertragen können und zur unerwünschten Geräuschabgabe führen. Insbesondere dann, wenn der Stator des Generators oder andere Komponenten mit Ihrer sogenannten Eigenfrequenz zur Schwingung angeregt werden, ist die Geräuschabgabe besonders groß.

Die Aufgabe der vorliegenden Erfindung besteht darin, ein Verfahren, einen Generator sowie eine Windenergieanlage anzugeben, welches bzw. welcher die vorgenannten Probleme beseitigt.

Diese Aufgabe wird gelöst durch einen Synchrongenerator mit einem Generator-Stator und einem relativ zum Stator bewegbaren Generator-Läufer, welcher n Pole aufweist, zum Erzeugen elektrischer Energie, wobei der zeitliche Verlauf der induzierten Spannung in einer Statorwicklung bzw. mehreren Statorwicklungen im wesentlichen dem Stromverlauf in einer Statorwicklung oder der Summe von wenigstens m Teilströmen in m Statorwicklungen angenähert ist, dadurch gekennzeichnet, daß die Pole asymmetrisch an dem Läufer angeordnet sind.

Vorteilhafte Ausführungen der Erfindung sind in den Unteransprüchen angegeben.

Der Erfindung liegt die Erkenntnis zugrunde, daß durch jede Drehmomentschwankung des Generators Anlaß für die Schwingungsanregung des Generators oder eines anderen Teils des Windenergiekonverters sein kann. Dies um so mehr, als bei einem Ringgenerator sehr große Drehmomente aufgebracht werden. Das Drehmoment des Generators ist proportional zum Gleichstrom durch eine Statorwicklung nach der Verkopplung hinter den Gleichrichterdioden. Hierbei gilt folgende Formel:

$$M = \frac{P}{\omega} = I_d \times U_d/\omega$$

mit P als Wirkleistung, M als Drehmoment, $\omega$ als Drehfrequenz, $I_d$ als Gleichstrom und $U_d$ als Gleichspannung.

Da $U_d$ konstant ist (Gleichspannungszwischenkreis) folgt: $M(t) = I_d(t)$, wobei $I_d(t)$ die Summe aller Ströme ist. Das Drehmoment M ist also direkt proportional der zeitlichen Summe aller Teilströme.

Wird nunmehr der Verlauf eines Teilstroms oder der zeitlichen Summe mehrerer Teilströme dem Verlauf der statorinduzierten Spannung angeglichen, wobei der zeitliche Verlauf der induzierten Spannung im wesentlichen trapezförmig ist, mit Abrundungen an den Auf- und Ablaufkanten sowie den Trapezdachkanten können Drehmoments-Schwankungen minimiert werden. Es wurde herausgefunden, daß durch Ausbildung des vorbeschriebenen Strom- und Spannungsverlaufes nicht nur die auftretenden Kräfte am Umfang von einer Statornut zur nächsten drastisch reduziert werden können, sondern auch der tangentiale Kraftverlauf am Umfang von einer Statornut zur nächsten wesentlich geglättet wird, was insgesamt zu einer erheblichen Reduzierung der Schwingungsanregung führte und was schließlich auch eine erhebliche Reduzierung des Schall-Leistungspegels des Synchrongenerators zur Folge hatte. Die gewünschten Signalformen des Stroms und der Spannung können beispielsweise durch folgende wesentliche Maßnahmen am Läufer erreicht werden:

a) asymmetrische Verteilung der einzelnen Pole über den Umfang des Polrades;

b) eine Änderung der Polschuhgeometrie dahingehend, daß der Polkopf in Obenaufsicht im wesentlichen pfeilförmig ausgeführt ist und in seinem Querschnitt einer Trapezform angenähert ist.

Beide Maßnahmen können gesondert aber auch in Kombination zusammen mit weiteren Maßnahmen am Generator ausgeführt werden, um das gewünschte Ziel der Geräuscharmut zu realisieren.

Bei den bisherigen Läufern von Mehrphasen-Generatoren sind die einzelnen Polschuhe in einem konstanten Abstand zueinander angeordnet. Bei einer solchen Verteilung aller Pole mit gleichem Abstand über den Läuferumfang passieren alle - vorderen oder hinteren - Polkanten synchron und zur gleichen Zeit eine jeweils am Stator gegenüberliegend angeordnete Nut des Stators. Dies hat zur Folge, daß an jeder Nut des Stators ein mechanischer Impuls entsteht, der eine Schwingung des Stators anregen kann. Die Pole regen also durch die Kraft des Magnetfeldes den Stator an, zu schwingen. Diese Anregungsfrequenz $F_{an}$ = (n/60 x Nuten) kann exakt die Eigenfrequenz des Stators treffen, so daß dieser sehr laute Geräusche erzeugt.

Gemäßeiner bevorzugten Ausführungsform der Erfindung wird der Läufer mit Polen ausgebildet, deren Abstände zueinander nicht konstant ist. Im Gegensatz zu den bekannten Anordnungen mit konstanten Polabständen haben erfindungsgemäß variierende Polabstände zur Folge, daß nicht mehr gleichzeitig mehrere mechanische, potentiell eine Schwingung induzierende Impulse von den die Nut eines Stators passierenden Polen des Läufers auf den Stator übertragen werden, so daß weniger Geräusche entstehen. Alternativ können die mehreren Pole Polköpfe mit unterschiedlichen Breiten aufweisen, um die erfindungsgemäßen Effekte zu erzielen.

In vorteilhafter Weise ist der Läufer mit Polen mit drei verschiedenen Polabständen a, b, c (a: $\tau_P$; b: $\tau_P + {}^1/_3 * \tau_N$; c: $\tau_P - {}^1/_3 * \tau_N$) ausgelegt. Durch die erfindungsgemäße Maßnahme wird die Anregungsfrequenz für den Stator und den Läufer um den Faktor 3 erhöht. Die Anregungsamplitude reduziert sich dabei auf ein Drittel der normalen Anregung.

Es ist also möglich, durch eine Variation der Polabstände die anregende Frequenz zu erhöhen bei gleichzeitiger Reduzierung der Amplitude, wodurch im Ergebnis eine Schwingungsanregung des Generatorstators entscheidend und deutlich erschwert wird. Dies hat allein bereits eine erhebliche Geräuschminimierung zur Folge.

Gemäß einem weiteren Aspekt der Erfindung wird die Aufgabe bei einem Synchrongenerator der eingangs genannten Art dadurch gelöst, daß die Pole des Läufers mindestens eine an einem Polkopf ausgebildete, in bezug auf die Bewegungsrichtung des Läufers schräg angeordnete Kante aufweisen.

Bei einem Synchrongenerator mit dem vorgeschriebenen Polkopf wird die Geräuschentwicklung ebenfalls stark minimiert, da die die Schwingungen des Stators verursachenden Kräfte, die während des Betriebs des Generators auf den Stator wirken, erheblich reduziert werden können. Dies wird durch die schräg angeordnete Kante des Polkopfs erreicht. Die die Schwingungen verursachenden Kräfte entstehen nämlich im wesentlichen während eines Übergangs des magnetischen Flusses von einem Nutsteg zum benachbarten Nutsteg; der Fluß verläuft dabei durch zwei benachbarte Pole des Läufers und den Luftspalt sowie einen Teil des Stators. Während des Übergangs von einem Nutsteg zum benachbarten Nutsteg wird der magnetische Fluß sprunghaft zum benachbarten Nutsteg verschoben - erst quasi für einen Moment unterbrochen - bis der nachfolgende Nutsteg die Position des zuvor an einem bestimmten Ort angeordneten Nutsteg erreicht hat und der magnetische Kreis wieder geschlossen ist.

Bei den bekannten Generatoren ist die in Bewegungsrichtung des Läufers vordere Kante eines Nutsteges stets exakt rechtwinklig zu der Bewegungsrichtung des Läufers angeordnet. Gleiches gilt für die in Bewegungsrichtung hinteren Kanten eines Polschuhs. Durch diese rechtwinklige Anordnung erreicht der sich drehende Nutsteg über seine gesamte Breite zu einem Zeitpunkt schlagartig eine bestimmte Nut des Ständers des Generators, so daß der zuvor beschriebene Übergang des magnetischen Flusses von einem Nutsteg zum nachfolgenden Nutsteg entsprechend "schlagartig" zu einem Zeitpunkt erfolgt. Aus diesem schlagartigen oder abrupten Übergang resultieren entsprechend große, die mechanischen Schwingungen verursachende Kräfte, so daß laute Geräusche entstehen.

Im Gegensatz hierzu wird erfindungsgemäß durch die schräge Anordnung der Vorderkante eines Polschuhs relativ zur Bewegungsrichtung des Läufers ein nicht abrupter, sondern allmählicher Übergang des magnetischen Flusses von einem Nutsteg zum nächsten realisiert, da ein Nutsteg zunächst mit seinem in Bewegungsrichtung vordersten Abschnitt der Vorderkante in den Bereich einer bestimmten Ständer-Nut kommt, und anschließend kontinuierlich weitere Abschnitte des Nutsteges in den Bereich der Nut gelangen. In Versuchen ist entsprechend festgestellt worden, daß die die Schwingungsgeräusche verursachenden Kräfte an dem Stator erheblich kleiner sind als bei den herkömmlichen Generatoren. Dadurch ist die Geräuschemission entsprechend reduziert.

Ein weiterer Effekt der Erfindung ist, daß die in den Ständerwicklungen induzierten Spannungen in ihrem zeitlichen Verlauf entsprechend dem schrägen Verlauf der Kante der Polkopfes variierbar ist.

Eine besonders bevorzugte Ausführungsform der Erfindung zeichnet sich dadurch aus, daß die in Bewegungsrichtung des Läufers vordere Kante eines Polkopfes zwei winklig zueinander angeordnete, in eine Spitze zulaufende Kantenabschnitte aufweist. Auf diese Weise können die die Geräusche verursachenden Kräfte weiter reduziert werden, und die Polköpfe sind im wesentlichen symmetrisch ausgebildet. Die Spitze weist dabei z. B. in Bewegungsrichtung des Läufers oder umgekehrt.

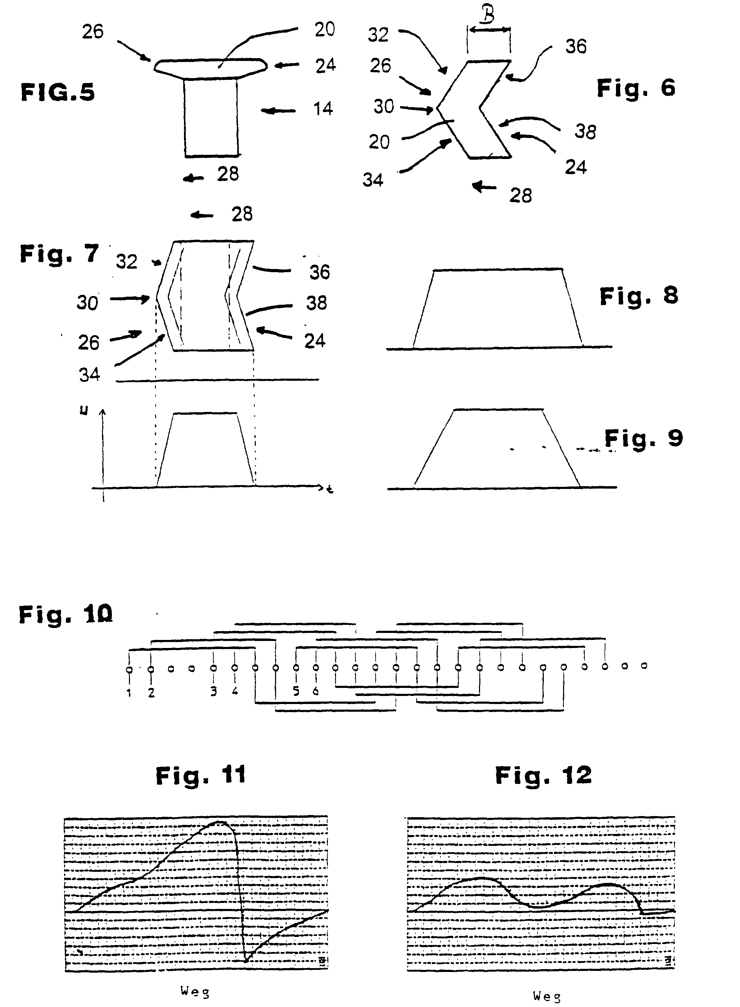

Vorzugsweise sind die Kantenabschnitte in einem Winkel von etwa 100° bis 140°, vorzugsweise 120° in bezug auf die Bewegungsrichtung des Läufers angeordnet. Die Breite b - Fig. 7 - eines Kantenabschnitts stimmt somit im wesentlichen mit dem Nutenabstand überein. Es ist gefunden worden, daß bei dieser Geometrie ein besonders verlustarmer Übergang des magnetischen Flusses bei geringer Geräuschentwicklung realisiert werden kann.

Eine weitere besonders bevorzugte Ausführungsform zeichnet sich dadurch aus, daß die Pole des Läufers mindestens eine an einem Polkopf ausgebildete, in bezug auf die Bewegungsrichtung des Läufers im wesentlichen schräg verlaufende hintere Kante aufweisen. Zweckmäßigerweise weist die in Bewegungsrichtung des Läufers hintere Kante eines Polkopfes zwei winklig zueinander angeordnete Kantenabschnitte auf, die parallel zu den an der vorderen Kante ausgebildeten Kantenabschnitten verlaufen, so daß der Polkopf in einer Draufsicht im wesentlichen pfeilförmig ausgebildet ist.

An der in Bewegungsrichtung hinteren Kante treten bei dieser Ausführungsform die zuvor beschriebenen, an der Vorderkante auftretenden Effekte ebenfalls an der hinteren Kante auf, so daß Geräusche weiter reduziert werden können und des Spannungsverlauf angepaßt ist. Darüber hinaus ermöglicht diese Maßnahme eine nahe Anordnung benachbarter Polköpfe, da diese kongruente Formen haben und sozusagen "ineinander passen".

Gemäß einem weiteren besonders vorteilhaften Aspekt der Erfindung hat ein Polkopf im Querschnitt etwa die Form eines Trapezes. Auf diese Weise hat die in dem Stator induzierte Spannung im zeitlichen Verlauf eine ebenfalls trapezförmige Form. Im Gegensatz hierzu sind die Polköpfe bei den herkömmlichen Generatoren als Sinusbögen geformt, um sinusförmige Spannungen zu erzeugen. Erfindungsgemäß lassen sich trapezförmige Spannungen induzieren. Bei einem trapezförmigen Spannungsverlauf ist die Amplitude über einen großen Zeitbereich konstant, so daß auf aufwendige Gleichstromfilter verzichtet werden kann oder diese wesentlich kleiner und somit kostengünstiger ausgeführt werden können. Entsprechend dem Spannungsverlauf liefert der erfindungsgemäße Generator gemäß dieser Ausführungsform ein nahezu konstantes Drehmoment über den Drehwinkel. Ferner ist der sogenannte Oberwellengehalt des Drehmoments sehr gering für eine Stromrichtermaschine. Bei den herkömmlichen Polköpfen sind die Oberwellen im Drehmomentenverlauf nachteilig.

Bei trapezförmiger Ausbildung des Polkopfes können ferner die Streufeldverluste, die beim Übergang von einem Polkopf zum nächsten entstehen, reduziert werden. Gemäß einer Weiterbildung sind die Kanten des trapezförmigen Polkopfes abgerundet. Auch hierdurch können Schwingungen sowie Streufeldverluste reduziert werden. Wichtig ist, daß ein Polkopf im Randbereich eine beidseitige Querschnittsverringerung aufweist.

Die Erfindung wird nachfolgend anhand eines in der Zeichnung dargestellten Ausführungsbeispieles näher erläutert. In der Zeichnung stellen dar:

Fig. 1 eine erfindungsgemäße Windkraftanlage miteinem Synchrongenerator in einer schematischen Darstellung;

Fig. 2 einen Läufer eines Generators mit variierendem Abstand der Polschuhe oder Polköpfe als schematische Darstellung;

Fig. 3 einen vergrößerten Ausschnitt des Läufers aus Fig. 2;

Fig. 4 einen Abschnitt eines Läufers und eines Stators des Synchrongenerators in schematischer Darstellung;

Fig. 5 einen erfindungsgemäßen Pol eines Läufers in einer Seitenansicht;

Fig. 6 den Pol aus Fig. 5 in einer Draufsicht;

Fig. 7 einen erfindungsgemäßen Pol als Draufsicht sowie ein zugehöriges Stator-Spannungs-Zeit-Diagramm;

Fig. 8 ein weiteres Stator-Spannungs-Zeit-Diagramm;

Fig. 9 ein weiteres Stator-Spannungs-Zeit-Diagramm;

Fig. 10 eine schematische Darstellung der Statorwicklung als 6-Phasen-Wicklung;

Fig. 11 ein den tangentialen Kraftverlauf am Umfang einer Statornut varanschaulichendes Kraft-Weg-Diagramm bei herkömmlichen Synchrongeneratoren;

Fig. 12 ein den tangentialen Kraftverlauf am Umfang einer Statornut veranschaulichendes Kraft-Weg-Diagramm bei einem erfindungsgemäßen Synchrongenerator;

Fig. 13 ein den tangentialen Kraftverlauf am Umfang einer Statornut veranschaulichendes Kraft-Weg-Diagramm bei einem weiteren erfindungsgemäßen Synchrongenerator;

Fig. 14 ein weiteres Kraft-Weg-Diagramm eines erfindungsgemäßen Synchrongenerators, bei dem eine Pfeilung um eine halbe Nutbreite bzw. eine ganze Nutbreite verwirklicht ist;

Fig. 15 ein weiteres Kraft-Weg-Diagramm eines Synchrongenerators mit Pfeilung um eine Nutbreite und asymmetrische Pol-Anordnung;

Fig. 16 ein Strom-Zeit-Diagramm des Generatorstroms;

Fig. 17 ein Strom-Zeit-Diagramm eines gleichgerichteten Stroms eines Drei-Phasen-Systems;

Fig. 18 ein Strom-Zeit-Diagramm gemäß Figur 1 mit 30° Phasenverschiebung;

Fig. 19 ein Strom-Zeit-Diagramm gemäß Figur 18 mit angezeichneten gleichgerichtetem Strom;

Fig. 20 ein Strom-Zeit-Diagramm mit einzelnen Phasenströmen und deren Summe;

Fig. 21 ein weiteres Ausführungsbeispiel eines erfindungsgemäßen Polkopfes mit abgerundeten Kanten;

Fig. 22 ein zu Figur 21 gehöriges Spannungs-Zeit-Diagramm der Stator-Spannung

Fig. 23 ein weiteres Strom-Zeit-Diagramm einer Statorphase;

Fig. 24 ein weiteres Strom-Zeit-Diagramm einer Statorphase; und

Fig. 25 ein Strom-Zeit-Diagramm der Summe der in den Fig. 23 und 24 gezeigten Strömen.

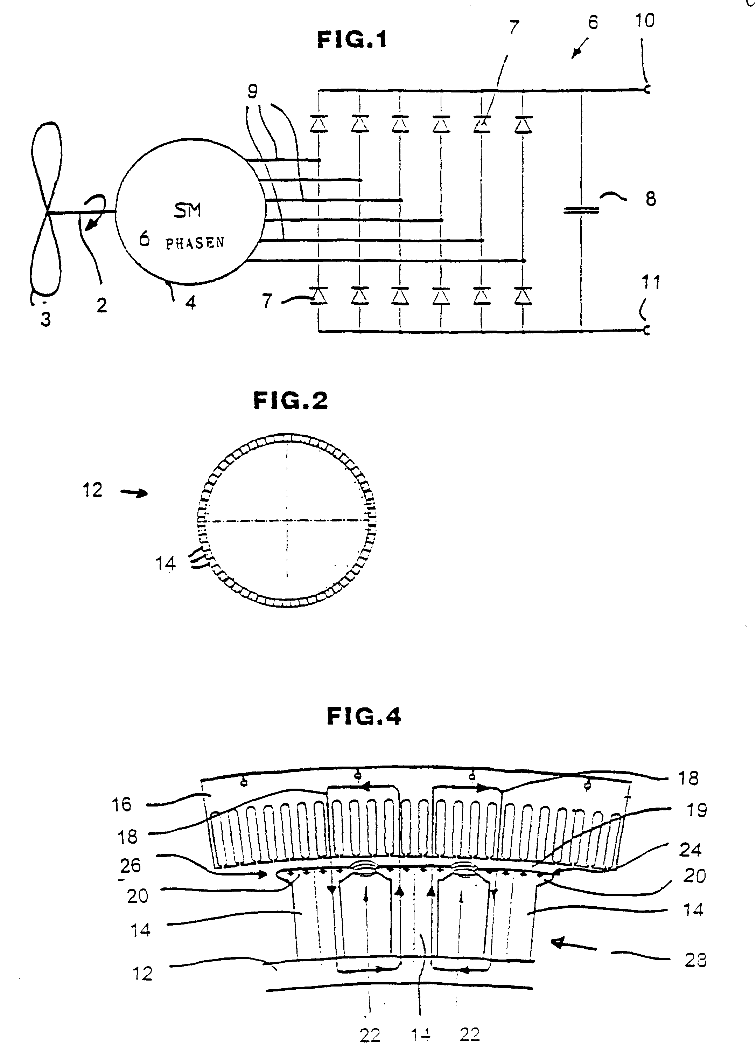

Fig. 1 veranschaulicht schematisch eine erfindungsgemäße Windkraftanlage mit einem mittels einer Welle 2 von einem Rotor 3 ohne Zwischenschaltung eines Getriebes direkt angetriebenen Mehrphasen-Synchrongenerator 4, der in bekannter Weise innerhalb einer Gondel an einem Turm gelagert ist.

Das Drehmoment des Generators 4 wird bestimmt von der magnetischen Induktion B, dem Ankerstrom $I_A$ und von dem Winkel zwischen diesen beiden Größen, während das magnetische Feld B durch die induzierte Spannung $U_{ind}$ repräsentiert wird. Dieser Zusammenhang läßt sich durch die Formel $M \sim B \cdot I_A \sin \omega T$ bzw. $M \sim I\,U_{ind} \cdot I_A \sin \omega T$ bei sinusförmigen Strömen beschreiben.

Der 6-Phasen aufweisende Synchrongenerator ist an eine Gleichrichterschaltung 6 mit mehreren Gleichrichterdioden 7 und einem Kondensator 8 angeschlossen, in dem von je einer der Wicklungen des Stators des Generators 4 eine Leitung 9 zwischen je zwei Gleichrichterdioden 7 führt, so daß im Betrieb eine gleichgerichtete Spannung an den Anschlußklemmen 10, 11 anliegt. Der Kondensator 8 ist zwischen die Anschlußklemmen 10, 11 geschaltet und sorgt für Spannungs- und Stromformen, die nach der Gleichrichtung einen annähernd idealen Gleichstrom ergeben.

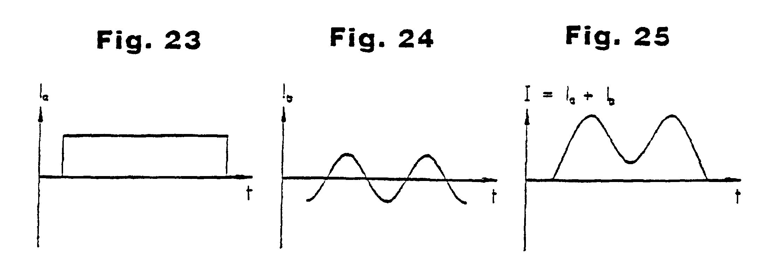

Der in den Wicklungen des unten näher beschriebenen Stators des Generators 4 induzierte Strom hat im wesentlichen einen Gleichstromanteil und einen Wechselstromanteil, vgl. Fig 23 bis 25. Der Wechselstromanteil sorgt für einen relativ sanften Stromanstieg bzw. -abfall einer Stromhalbwelle des Ausgangsstroms einer der 6-Phasen. Die sogenannte Cos $\phi$ - Schwingung sorgt für einen kontinuierlichen Stromübergang von einer Phase zur nächsten. Durch die in der Gleichrichterschaltung 6 vorgenommene Addition aller Phasenströme wird die an den Anschlußklemmen 10, 11 anliegende Spannung und der abgenommene Strom im wesentlichen geglättet sein. Für eine Glättung sorgt auch der Kondensator 8. Der erfindungsgemäße Generator 4 liefert nach der Gleichrichtung einen Gleichstrom mit nahezu konstanter Amplitude sowie ein nahezu konstantes Drehmoment über den Drehwinkel, so daß Gleichstromfilter entfallen oder deutlich kleiner ausgeführt werden können. Der Oberwellengehalt des Drehmoments ist klein. Ferner ist der erfindungsgemäße Generator 4 geräusch- und vibrationsärmer.

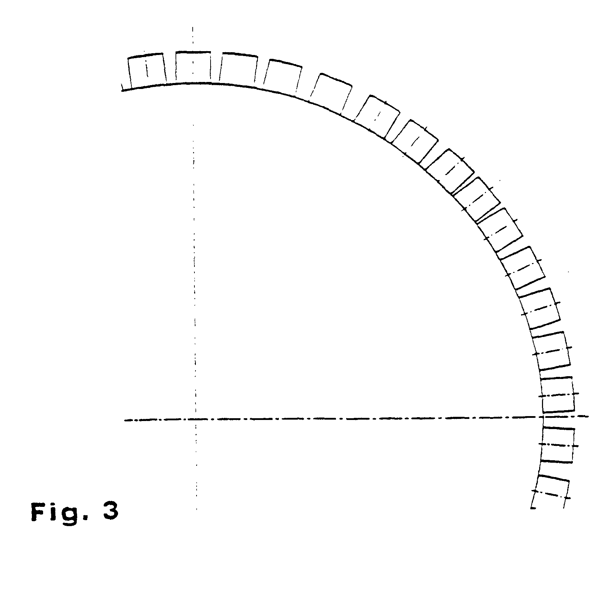

Aus den Fig. 2 und 3 ist ersichtlich, daß die Abstände $\tau_P$ der Pole 14 über den Umfang des Läufers 12 nicht konstant sind, sondern unterschiedliche Werte a, b und c annehmen können, nämlich einen ersten Polabstand a) $\tau_P$, einen weiteren Polabstand b) $\tau_P + \frac{1}{3} * \tau_N$ sowie einen weiteren Polabstand $\tau_P - \frac{1}{3} * \tau_N$, wobei $\tau_N$ die Breite einer Nut (Nutbreite) des Stators ist. Somit ist eine über den Umfang asymmetrische Anordnung der Pole verwirklicht. Alternativ dazu oder kombiniert hiermit können die Polabstände auch durch Verschiebung eines Pols 14 um eine bestimmte Nutbreite realisiert werden.

Durch eine derartige asymmetrische Anordnung wird die Anregefrequenz für die in den Nuten angeordneten Wicklungen des Stators als Verschiebung um 1/3 der Nutbreite um den Faktor 3 erhöht gegenüber einer nicht verschobenen Anordnung. Die Amplitude der Anregungskraft reduziert sich aber auf 1/3 der Anregung bei nicht versetzter Anordnung. Alternativ können die Breiten der Polköpfe 20 über den Umfang des Läufers 12 unterschiedlich sein, um eine asymmetrische Ausbildung der Pole 14 zu erreichen, um die erfindungsgemäßen Effekte zu erzielen.

Fig. 4 veranschaulicht den magnetischen Fluß φ zwischen dem die Pole 14 aufweisenden Läufer 12 und dem Stator 16. Der von den Polen 14 erregte magnetische Fluß φ verläuft umlaufend gemäß den Linien 18 durch einen Pol 14, den Luftspalt 18 und das Blechpaket des Stators 16 zurück durch den Luftspalt 18 in einen benachbarten Pol 14 des Läufers 12. Zwischen zwei benachbarten Polköpfen 20 kommt es zu einem Streufluß, vgl. Pfeile 22, der den zur Stromerzeugung nutzbaren magnetischen Fluß φ verringert.

Der Läufer 12 ist als Schenkelpolmaschine ausgeführt. Die Form der Pole 14, insbesondere der Polköpfe 20 ist am besten aus den Fig. 5 bis 7 ersichtlich. Die Seitenansicht der Fig. 5 veranschaulicht, daß die Polköpfe 20 etwa die Form eines Trapezes mit Abrundungen an beiden Kanten 24, 26 des Polkopfes 20 aufweisen. Im Randbereich eines Polkopfes 20 verringert sich der Querschnitt des Polkopfes 20 in Richtung auf dessen Ende beidseitig. Der Querschnitt nimmt mit zunehmender Nähe zum Rand somit beidseitig ab.

Wie aus Fig. 6 ersichtlich ist, weist der Polkopf 14 in einer Draufsicht auf die dem Luftspalt 18 zugewandte Oberfläche die Form eines Pfeils auf. Die in Bewegungsrichtung des Läufers 12, die durch einen Pfeil 28 in den Fig. 4 bis 7 gekennzeichnet ist, vordere Kante 26 weist zwei winklig zueinander angeordnete zu einer Spitze 30 zusammenlaufende Kantenabschnitte 32, 34 auf, die in bezug auf die Bewegungsrichtung 28 des Läufers 12 und somit der Polköpfe 20 schräg angeordnet sind. Die Kantenabschnitte 32, 34 sind in bezug auf die Bewegungsrichtung 28 des Läufers 12 in einem Winkel von etwa 120° angeordnet.

Die in Bewegungsrichtung des Läufers 28 hintere Kante 24 eines Polkopfes 20 weist zwei ebenfalls in bezug auf die Bewegungsrichtung 28 des Läufers 12 schräg angeordnete Kantenabschnitte 36, 38 auf. Der Kantenabschnitt 36 ist parallel und um die Breite B (Fig. 6) versetzt zu dem vorderen Kantenabschnitt 32 und der Kantenabschnitt 38 parallel und um die Breite B versetzt zu dem Kantenabschnitt 34 der Vorder-Kante 26 angeordnet, so daß in der Ansicht der Fig. 6 der Polkopf 20 eine Pfeilform hat, die auch als Pfeilung bezeichnet wird.

Fig. 7 zeigt einen weiteren Pol 14, bei dem der Polkopf 20 ebenfalls der Draufsicht pfeilförmig ausgebildet ist. Gegenüber dem in Fig. 6 gezeigten Polkopf 20 weisen die Kantenabschnitte 32, 34, 36, 38 jedoch andere Winkel in bezug auf die Bewegungsrichtung 28 des Läufers 12 auf.

Im unteren Teil der Fig. 7 ist die in einer Wicklung des Stators 16 induzierte Spannung U über der Zeit t aufgetragen. Der Verlauf der Spannung ist etwa trapezförmig, was auf die Fig. 5 dargestellte in einer Seitenansicht sowie in einem Querschnitt trapezförmige Gestaltung des Polkopfes 20 zurückzuführen ist. Die induzierte Spannung ist proportional zu dem magnetischen Fluß φ, der von den Polen 20 erregt wird und durch das Blechpaket des Stators 16 fließt. Der Fluß φ ist proportional zum magnetischen Feld B. Um eine trapezförmige Spannung zu induzieren, wie in Fig. 7 gezeigt ist, ist die Amplitude des magnetischen Feldes B über den Weg einer Polteilung bzw. des Polkopfes 20 ebenfalls trapezförmig. Im Randbereich eines Polkopfes, d.h. im Bereich der vorderen und hinteren Kanten 24, 26 des Polkopfes 20, hängt die Amplitude der magnetischen Induktion B und somit der induzierten Spannung U von der geometrischen Form der Kante 24, 26 ab, sowie vom Luftspalt 19. Im Ausführungsbeispiel sind die Kanten 24 und 26 abgerundet, sie können jedoch auch andere Formen annehmen, um den ansteigenden oder abfallenden Bereich des Spannungsverlaufes zwischen einer Spannung U = 0 und der maximalen Spannung zu variieren.

Die Fig. 8 und 9 zeigen Spannungs-Zeitverläufe der in den Wicklungen des Stators 16 induzierten Spannung U. Ist bei alternativen, nicht dargestellten Polköpfen ist beispielsweise der Winkel zwischen den schräg angeordneten Kantenabschnitten 32, 34, 36, 38 gegenüber der Bewegungsrichtung 28 des Läufers 12 größer und somit die Pfeilform in der Draufsicht spitzer, so entsteht ein zeitlich längerer Spannungsabschnitt mit ansteigender Spannung U bzw. mit abfallender Spannung U, während sich der Abschnitt konstanter, maximaler Spannung U zeitlich verkürzt, wie dies in Fig. 9 schematisch gezeigt ist.

Fig. 8 veranschaulicht ein Ausführungsbeispiel eines Polkopfes 20, bei dem der Winkel Kantenabschnitte 32, 34, 36, 38 gegenüber der Bewegungsrichtung 28 verringert ist, so daß zeitlich kürzere Spannungsanstiegs- bzw. Abstiegsabschnitte realisiert sind. Die Spannungsform kann somit gezielt durch die konkrete Geometrie der Polköpfe 20, insbesondere deren Pfeilform, variiert werden. Neben der Spannungsform kann auch eine tangential resultierende Kraft der Pole in Abhängigkeit von dem pfeilförmigen Polkopf 20 variiert werden. Je größer der Pfeilungsgrad ist, desto geringer ist die erzeugte tangential resultierende Kraft. Wenn eine schräge Kante 24, 26 (Figur 6 oder 7) eine gesamte Nut des Stators 16 bedeckt, wird die tangentiale Kraft sehr klein. Aber auch ein relativ kleiner Pfeilungsgrad, bei dem eine schräge Kante 24, 26 eine halbe Nut überdeckt, sorgt dafür, daß der zeitliche Verlauf der Kraft erheblich gleichmäßiger wird. Dadurch reduziert sich auch das von dem Generator emittierte Geräusch, da die Amplitude der Kraft Hauptanreger für den Schall ist. Kraftverläufe sind in den Figuren 11 bis 15 dargestellt.

Aus Fig. 10 ist die Anordnung der Wicklungen im Stator 16 ersichtlich, der 6 Phasen aufweist. Die Phase 1 ist an dem Umfang des Stators 16 (vgl. Fig. 4) bei 0°, Phase 2 bei 30°, Phase 3 bei 120°, Phase 4 bei 150°, Phase 5 bei 240° und Phase 6 bei 270° angeordnet. In nicht dargestellter Weise kann der Stator 60 mit Polzahlen von 60 bis 100 ausgeführt werden. Die Wicklungen können nach einer besonderen Wickelmethode angeordnet werden, bei der alle Pole 14 in einem Zug gewik-

kelt sind, ohne daß Kontaktstellen, die häufig als "Brükken" bezeichnet werden, entstehen.

Aus dem in Fig. 11 dargestellten Kraft-Weg-Diagramm ist der Verlauf einer tangential am Umfang einer an dem einer Wicklung des Stators 16 angreifenden tangentialen Kraft in Abhängigkeit von dem Weg des Läufers 12 für einen herkömmlichen Synchrongenerator nach dem Stand der Technik dargestellt, bei der eine gleichmäßige Verteilung der einzelnen Pole über den Umfang des Läufers 12 vorgesehen ist. Es ist eine relativ große Amplitude der Kraft erkennbar.

Fig. 12 zeigt demgegenüber den Kraftverlauf bei einer erfindungsgemäßen asymmetrischen Anordnung und Verschiebung der einzelnen Pole 14 um eine halbe Nutbreite. Die Amplituden der Kraft in Abhängigkeit vom Weg (d.h. der Drehung des Läufers 12) und damit auch in Abhängigkeit von der Zeit sind deutlich niedriger als bei den bekannten Generatoren.

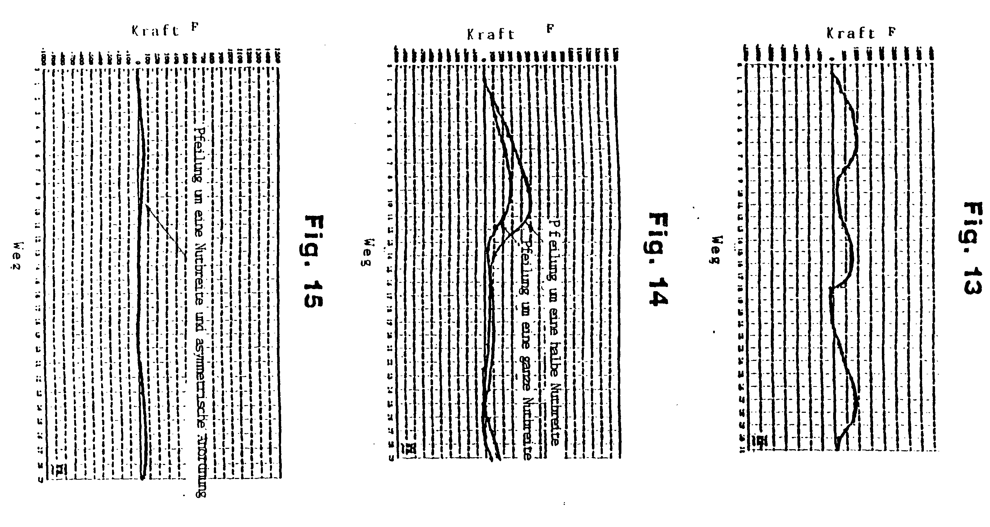

Fig. 13 zeigt einen Kraft-Weg-Verlauf bei einem erfindungsgemäßen Synchrongenerator mit einer asymmetrischen Anordnung der Pole entlang des Umfangs des Läufers 12 mit einer Verschiebung der Pole um 1/3 der Nutbreite. Auch aus Fig. 13 ist ersichtlich, daß die Amplituden der Kraft auf die Wicklungen des Stators 16 deutlich gegenüber den bei bekannten Generatoren auftretenden Kräften reduziert sind. Die durch die Kräfte verursachten Geräusche können erfindungsgemäß erheblich reduziert werden.

Aus dem in Figur 14 dargestellten Kraft-Weg-Diagramm, in dem die tangential resultierende Kraft der Pole 20 über dem Weg dargestellt ist, ist ersichtlich, daß durch die erfindungsgemäße Pfeilung der Polköpfe 20 geringere Kräfte resultieren gegenüber herkömmlichen Generatoren. Die Amplituden der dargestellten Kräfte sind am geringsten, wenn die Pfeilung derart ausgebildet ist, daß eine gegenüber der Bewegungsrichtung 28 des Läufers 12 schräge Kante 24, 26 eines Polkopfes 20 sich über eine ganze Nutbreite erstreckt, während bei einer Pfeilung derart, daß sich eine schräge Kante 24, 26 über eine halbe Nutbreite erstreckt, gegenüber herkömmlichen Generatoren reduzierte Kräfte erzeugt werden, die jedoch über den zuvor beschriebenen liegen. Geräusche lassen sich auf diese Weise erheblich reduzieren, da die Amplitude der Krafthauptanreger für den Schall ist. Ein kurzer Kraftimpuls enthält ein sehr großes Anregungsfrequenzspektrum.

Aus Figur 15 ist ersichtlich, daß die Geräuschreduzierung am größten ist, wenn die Pfeilung sich über eine ganze Nutbreite erstreckt und eine erfindungsgemäße asymmetrische Anordnung der Pole 14 an dem Läufer 12 verwirklicht ist. Die dabei entstehenden tangentialen Kräfte sind sehr gering, so daß sich durch eine Kombination der beiden erfindungsgemäßen Maßnahmen ein maximaler Schallreduziereffekt ergibt. Die asymmetrische Anordnung der Pole 14 kann dabei gezielt so gewählt werden, daß bestimmte Anregerfrequenzen nicht auftreten.

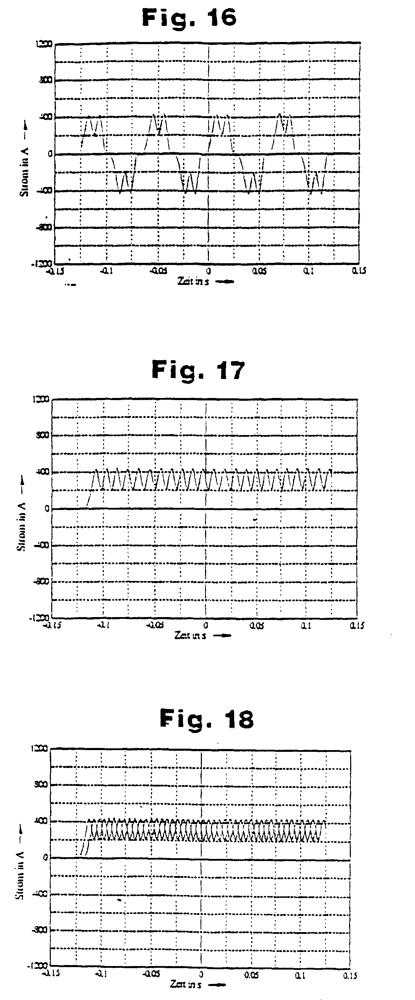

Die Figuren 16 bis 20 veranschauliche Phasenströme in Abhängigkeit von der Zeit.

In Figur 16 ist der Stromverlauf einer Phase ohne asymmetrische Anordnung der Pole dargestellt.

Figur 17 veranschaulicht eine Überlagerung oder Summierung zweier Ströme eines Drei-Phasensystems mit einer Stromflußdauer, die größer als 120° ist. Die Überlagerung wird durch eine Gleichrichtung erzielt.

Aus Figur 18 ist ersichtlich, daß bei zusätzlicher Phasenverschiebung um 30° ein anderer Stromverlauf entsteht.

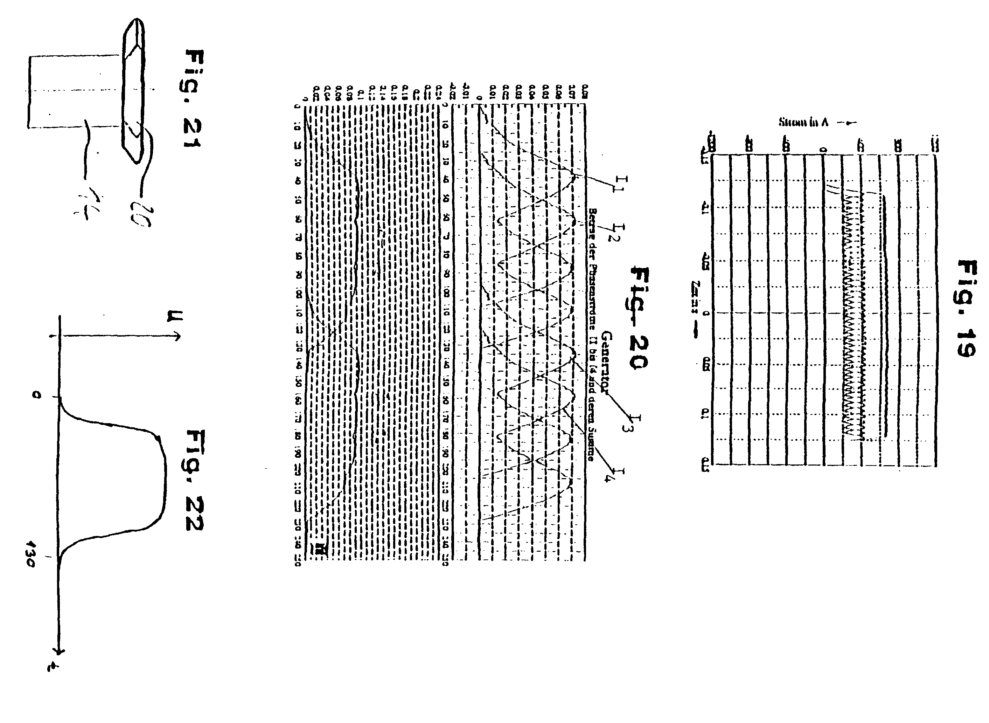

Figur 19 veranschaulicht die Gleichrichtung der in Figur 18 dargestellten Phasenströme, wobei die resultierende einen Gleichstrom mit geringer Welligkeit darstellt. Auf diese Weise werden nicht-sinusförmige Spannungen in den einzelnen Statorphasen erzeugt. Bei Berücksichtigung einer stark nicht linearen Last der Gleichrichterschaltung 6 mit Kondensator 8 (vgl. Figur 1), können Ströme erzeugt werden, die bei einer Verschiebung von 30° im Stator einen Strombelag mit einem Minimum an Drehmomentenschwankungen erzeugen.

Auch Figur 20 veranschaulicht die Beträge der Phasenströme mehrerer StatorWicklungen in dem oberen Abschnitt des Diagramms sowie die durch Gleichrichtung erzielte Summe der Beträge der Phasenströme in dem unteren Abschnitt des Diagramms.

Figur 21 veranschaulicht ein weiteres Ausführungsbeispiel eines erfindungsgemäßen Poles 14 mit einem im wesentlichen trapezförmigen Polkopf 20 mit abgerundeten Endbereichen, die sich im Querschnitt beidseitig verringern.

Figur 22 zeigt schließlich ein Spannungs-Zeit-Diagramm, das eine in einem Stator induzierte Spannung, die durch Verwendung eines in Figur 21 gezeigten Pols 14 mit Hilfe eines erfindungsgemäßen Generators 4 erzeugt werden kann. Die Spannungsform hat abgerundete Kanten. Sie kann je nach Bedarf durch modifizierte Formen des Polkopfes 20 variiert werden, beispielsweise indem die abgerundeten Kanten stärkere Querschnittsverringerungen oder Rundungen aufweisen.

Das in Fig. 23 dargestellte Strom-Zeit-Diagramm einer Statorphase zeigt einen rechteckförmigen Stromverlauf, der den in den Wicklungen des unten näher beschriebenen Stators des Generators 4 induzierten Gleichstromanteil des Stroms zeigt.

Fig. 24 zeigt einen Wechselstromanteil des in einer Statorphase induzierten Stroms. Der Wechselstromanteil sorgt für einen relativ sanften Stromanstieg bzw. -abfall einer Stromhalbwelle des Ausgangsstroms einer der 6-Phasen. Die Cos $\phi$ - Schwingung sorgt für einen kontinuierlichen Stromübergang von einer Phase zur nächsten.

Fig. 25 zeigt in einem Strom-Zeit-Diagramm die Summe - ein Rechteck mit der 6. Oberschwindung - der in den Fig. 23 und 24 gezeigten Ströme einer Statorphase wie auch in Fig. 20 dargestellt. Durch die in der Gleichrichterschaltung 6 vorgenommene Addition aller Phasenströme wird die an den Anschlußklemmen 10, 11 anliegende Spannung und der abgenommene Strom im wesentlichen geglättet sein.

**Patentansprüche**

1. Synchrongenerator mit einem Generator-Stator (16) und einem relativ zum Stator (16) bewegbaren Generator-Läufer (12), welcher n Pole (14) aufweist, zum Erzeugen elektrischer Energie, wobei der zeitliche Verlauf der induzierten Spannung in einer Statorwicklung bzw. mehreren Statorwicklungen im wesentlichen dem Stromverlauf in einer Statorwicklung oder der Summe von wenigstens m Teilströmen (I1, I2) in m Statorwicklungen angenähert ist,
**dadurch gekennzeichnet, daß** die Pole (14) asymmetrisch an dem Läufer (12) angeordnet sind.

2. Synchrongenerator nach Anspruch 1,
**dadurch gekennzeichnet, daß** die Pole (14) asymmetrisch ausgebildet sind.

3. Synchrongenerator nach Anspruch 1 oder 2,
**dadurch gekennzeichnet, daß** der Abstand der Pole (14) zueinander nicht konstant ist.

4. Synchrongenerator nach Anspruch 3,
**dadurch gekennzeichnet, daß** die Pole (14) mit drei verschiedenen Polabständen an dem Läufer (12) angeordnet sind.

5. Synchrongenerator, insbesondere nach dem Oberbegriff des Anspruchs 1,
**dadurch gekennzeichnet, daß** die Pole (14) des Läufers (12) mindestens eine an einem Polkopf (20) ausgebildete, in bezug auf die Bewegungsrichtung (28) des Läufers (12) im wesentlichen schräg verlaufende vordere Kante (26) aufweisen.

6. Synchrongenerator nach Anspruch 5,
**dadurch gekennzeichnet, daß** die in Bewegungsrichtung (28) des Läufers (12) vordere Kante (26) eines Polkopfes (20) zwei winklig zueinander angeordnete, zu einer Spitze (30) zulaufende Kantenabschnitte (32, 34) aufweist.

7. Synchrongenerator nach Anspruch 6,
**dadurch gekennzeichnet, daß** die Kantenabschnitte (32, 34) der vorderen Kante (26) in einem Winkel von etwa 100° bis 140°, vorzugsweise 120° in bezug auf die Bewegungsrichtung (28) des Läufers (12) angeordnet sind.

8. Synchrongenerator nach Anspruch 5 oder 6,
**dadurch gekennzeichnet, daß** die Pole (14) des Läufers (12) mindestens eine an einem Polkopf (20) ausgebildete, in bezug auf die Bewegungsrichtung (28) des Läufers (12) im wesentlichen schräg verlaufende hintere Kante (24) aufweisen.

9. Synchrongenerator nach Anspruch 8,
**dadurch gekennzeichnet, daß** die hintere Kante (24) zwei winklig zueinander angeordnete Kantenabschnitte (36, 38) aufweist, die parallel zu den an der vorderen Kante (26) ausgebildeten Kantenabschnitten (32, 34) verlaufen, so daß der Polkopf (20) in radialer Draufsicht im wesentlichen pfeilförmig ausgebildet ist.

10. Synchrongenerator nach einem der vorstehenden Ansprüche,
**dadurch gekennzeichnet, daß** ein Polkopf (20) eines Pols (14) im Querschnitt etwa die Form eines Trapezes hat.

11. Synchrongenerator nach Anspruch 10,
**gekennzeichnet durch** eine beidseitige Querschnittsverringerung im Randbereich des Polkopfes (20).

12. Synchrongenerator nach Anspruch 10,
**dadurch gekennzeichnet, daß** die Kanten (24, 26) des Trapezes abgerundet sind.

13. Windenergieanlage,
mit einem Turm, einem an diesem angeordneten Rotor sowie einem von dem Rotor antreibbaren Generator (4),
**dadurch gekennzeichnet, daß** der Generator (4) nach mindestens einem der vorstehenden Ansprüche ausgebildet ist.

**Claims**

1. Synchronous generator having a generator stator (16) and having a generator rotor (12) which can move relative to the stator (16) and has n poles (14), for producing electrical power, with the waveform of the induced voltage in one stator winding or in a number of stator windings essentially approximating the current waveform in one stator winding or the sum of at least m current elements (I1, I1) in m stator windings,
**characterized in that** the poles (14) are arranged asymmetrically on the rotor (12).

2. Synchronous generator according to Claim 1,
**characterized in that** the poles (14) are asymmetric.

3. Synchronous generator according to Claim 1 or 2,
**characterized in that** the pitch of the poles (14) is not constant.

**4.** Synchronous generator according to Claim 3, **characterized in that** the poles (14) are arranged with three different pole pitches on the rotor (12).

**5.** Synchronous generator in particular according to the pre-**characterizing** clause of Claim 1, **characterized in that** the poles (14) of the rotor (12) have at least one front edge (26), which is formed on a pole head (20) and runs essentially obliquely with respect to the movement direction (28) of the rotor (12).

**6.** Synchronous generator according to Claim 5, **characterized in that** the front edge (26), in the movement direction (28) of the rotor (12), of a pole head (20) has two edge sections (32, 34), which are arranged at an angle to one another and taper to a point (30).

**7.** Synchronous generator according to Claim 6, **characterized in that** the edge sections (32, 34) of the front edge (26) are arranged at an angle of approximately 100° to 140°, preferably 120°, to the movement direction (28) of the rotor (12).

**8.** Synchronous generator according to Claim 5 or 6, **characterized in that** the poles (14) of the rotor (12) have at least one rear edge (24), which is formed on a pole head (20) and runs essentially obliquely with respect to the movement direction (28) of the rotor (12).

**9.** Synchronous generator according to Claim 8, **characterized in that** the rear edge (24) has two edge sections (36, 38) which are arranged at an angle to one another and run parallel to the edge sections (32, 34) which are formed on the front edge (26), so that, in a radial plan view, the pole head (20) is essentially arrow-shaped.

**10.** Synchronous generator according to one of the preceding claims, **characterized in that** a pole head (20) of a pole (14) has an approximately trapezoidal cross section.

**11.** Synchronous generator according to Claim 10, **characterized by** the cross section being reduced on both sides in the edge region of the pole head (20).

**12.** Synchronous generator according to Claim 10, **characterized in that** the edges (24, 26) of the trapezoid are rounded.

**13.** Wind power plant, having a tower, having a rotor arranged on this tower, and having a generator (4) which can be driven by the rotor, **characterized in that** the generator (4) is designed according to at least one of the above claims.

## Revendications

**1.** Alternateur synchrone équipé d'un stator d'alternateur (16) et d'un rotor d'alternateur (12), susceptible de se déplacer par rapport au stator (16), qui présente n pôles (14), destinés à générer de l'énergie électrique, la courbe dans le temps de la tension induite dans un enroulement de stator ou plusieurs enroulements de stator étant sensiblement proche de la courbe de courant dans un enroulement de stator ou de la somme d'au moins m courants partiels (11, 12) dans m enroulement de stator, **caractérisé en ce que** les pôles (14) sont disposés de façon dissymétrique sur le rotor (12).

**2.** Alternateur synchrone selon la revendication 1, **caractérisé en ce que** les pôles (14) sont conçus de façon dissymétrique.

**3.** Alternateur synchrone selon la revendication 1 ou 2, **caractérisé en ce que** l'espacement des pôles (14) les uns par rapport aux autres n'est pas constant.

**4.** Alternateur synchrone selon la revendication 3, **caractérisé en ce que** les pôles (14) sont disposés sur le rotor (12) avec trois espacements de pôles différents.

**5.** Alternateur synchrone, en particulier conforme au préambule de la revendication 1, **caractérisé en ce que** les pôles (14) du rotor (12) présentent au moins une arête avant (26) réalisée sur un sommet de pôle (20) et agencée de façon sensiblement inclinée par rapport au sens de déplacement (28) du rotor (12).

**6.** Alternateur synchrone selon la revendication 5, **caractérisé en ce que** l'arête (26) avant dans le sens de déplacement (28) du rotor (12) d'un sommet de pôle (20) présente deux parties d'arête (32, 34) disposés en angle l'un par rapport à l'autre et arrivant en formant une pointe (30).

**7.** Alternateur synchrone selon la revendication 6, **caractérisé en ce que** les parties d'arête (32, 34) de l'arête avant (26) sont disposées dans un angle d'environ 100° à 140°, de préférence 120°, par rapport au sens de déplacement (28) du rotor (12).

**8.** Alternateur synchrone selon la revendication 5 ou 6, **caractérisé en ce que** les pôles (14) du rotor (12) présentent au moins un bord (24) arrière réalisé sur une tête de pôle (20), et agencé de façon sensiblement inclinée par rapport au sens de déplacement (28) du rotor (12).

9. Alternateur synchrone selon la revendication 8, **caractérisé en ce que** l'arête (24) arrière présente deux parties d'arête (36, 38) disposées formant un angle l'une par rapport à l'autre, lesquelles sont agencées parallèlement aux parties d'arête (32, 34) conçues sur l'arête (26) avant, de sorte que le sommet de pôle (20) est conçu dans une vue de dessus radiale sensiblement en forme de flèche.

10. Alternateur synchrone selon l'une quelconque des revendications précédentes, **caractérisé en ce qu'**un sommet de pôle (20) d'un pôle (14) a à peu près la forme d'un trapèze vu en coupe transversale.

11. Alternateur synchrone selon la revendication 10, **caractérisé par** une réduction de la section des deux côtés dans la zone périphérique du sommet du pôle (20).

12. Alternateur synchrone selon la revendication 10, **caractérisé en ce que** les arêtes (24, 26) du trapèze sont arrondies.

13. Installation éolienne, équipée d'une tour, d'un rotor disposé sur cette tour et d'un alternateur (4) pouvant être entraîné par le rotor,
    **caractérisée en ce que** l'alternateur (4) est réalisé selon au moins l'une quelconque des revendications précédentes.

**FIG.1**

**FIG.2**

**FIG.4**

**Fig. 3**

FIG.5

Fig. 6

Fig. 7

Fig. 8

Fig. 9

Fig. 10

Fig. 11

Weg

Fig. 12

Weg

# Fig. 13

Weg

# Fig. 14

Pfeilung um eine halbe Nutbreite

Pfeilung um eine ganze Nutbreite

Weg

# Fig. 15

Pfeilung um eine Nutbreite und asymmetrische Anordnung

Weg

## Fig. 16

## Fig. 17

## Fig. 18

## Fig. 19

## Fig. 20

Betrag der Phasenströme I1 bis I4 und deren Summe

## Fig. 21

## Fig. 22

**Fig. 23**

**Fig. 24**

**Fig. 25**